# FASCICULE DE BREVET EUROPEEN

(11) **EP 1 885 790 B1**
(45) Date de publication et mention de la délivrance du brevet: **16.12.2009**
(21) Numéro de dépôt: 06741311.2
(22) Date de dépôt: 24.05.2006
(51) Int. Cl.: C08K 7/24, C08K 9/10, C08F 2/44

(54) **PROCEDE DE DISPERSION DE NANOTUBES DE CARBONE DANS UNE MATRICE POLYMERIQUE**
VERFAHREN ZUM DISPERGIEREN VON KOHLENSTOFFNANORÖHREN IN EINER POLYMERMATRIX
METHOD FOR DISPERSING CARBON NANOTUBES IN A POLYMER MATRIX

(30) Priorité: 30.05.2005 EP 05447125; 17.03.2006 US 783784 P
(43) Date de publication de la demande: 13.02.2008
(73) Titulaire: Nanocyl S.A., 5060 Sambreville (BE)
(72) Inventeur: ALEXANDRE, Michäel, B-4102 Ougree (BE); BONDUEL, Daniel, B-7000 Mons (BE); CLAES, Michäel, B-4020 Liege (BE); DUBOIS, Philippe, B-4260 Ciplet (Braives) (BE); PEETERBROECK, Sophie, B-1460 Virginal (BE); PEGEL, Sven, 01159 Dresden (DE); PÖTSCHKE, Petra, 01309 Dresden (DE)
(74) Mandataire: Heck, Dieter
(86) Numéro de dépôt international: PCT/BE2006/000061
(87) Numéro de publication internationale: WO 2006/128261

(56) Documents cités:
- WO-A-2005/012170
- DATABASE CA [Online] CHEMICAL ABSTRACTS SERVICE, COLUMBUS, OHIO, US; 3 juillet 1999 (1999-07-03), TANG, BEN ZHONG ET AL: "Preparation, Alignment, and Optical Properties of Soluble Poly(phenylacetylene)-Wrapped Carbon Nanotubes" XP002390666 extrait de STN Database accession no. 1999:202399 & MACROMOLECULES , 32(8), 2569-2576 CODEN: MAMOBX; ISSN: 0024-9297, 1999,

## Description

### Objet de l'invention

La présente invention se rapporte au domaine des matériaux composites et plus particulièrement des nanocomposites. L'invention concerne un procédé de dispersion amélioré de nanotubes de carbone dans une matrice polymérique.

### Etat de la technique

Parmi les composites à matrice polymérique, on distingue, selon la taille des particules, les « microcomposites » dont les trois dimensions de la charge sont supérieures ou égales au micromètre, et les « nanocomposites » pour lesquels au moins une des trois dimensions de la charge est inférieure à 100nm, voire même de l'ordre de un à quelques dizaines de nanomètres.

Les nanocomposites sont d'un intérêt particulier dans le domaine industriel car ils présentent des propriétés remarquables pour des taux de charge relativement faibles, c'est à dire inférieurs à 10% en poids. En effet, ils apportent une amélioration significative des propriétés mécaniques ou électriques de la matrice polymère. De plus, contrairement aux renforts de type fibrillaire, ils renforcent la matrice polymérique dans toutes les directions de l'espace.

Les nanocomposites comprenant comme charges particulaires des nanotubes de carbone ont déjà été proposés pour différentes applications.

Toutefois, en pratique, l'utilisation des nanotubes de carbone comme charges dans des matrices polymères pour fabriquer des nanocomposites se heurte à des difficultés. En effet, il s'avère que les nanotubes de carbone ont tendance à s'agréger ensemble pour former des « fagots » très stables, encore appelés agrégats ou agglomérats. La présence de tels agrégats altère les propriétés physiques et mécaniques des composites dans lesquels ils sont présents.

Afin d'éviter ce phénomène d'agrégation et de conserver les propriétés physiques, mécaniques et électriques des matrices polymériques formant de tels composites, on a pensé à enrober les nanotubes de carbone. Ainsi, le document WO 02/16257 divulgue une composition qui comprend des nanotubes de carbone simple paroi enrobés d'un polymère. On peut citer également le document WO 2005/040265 qui divulgue quant à lui une composition comportant une matrice polymérique et 0.1 à 10% en poids de nanotubes enrobés de polyaniline.

Toutefois, ces solutions permettent de limiter la taille des agrégats, mais sans pouvoir les éviter totalement, afin d'obtenir une dispersion homogène à l'échelle nanoscopique.

Par ailleurs, le document WO 2005/012170 divulgue un procédé d'enrobage particulier qui permet d'augmenter la compatibilité des nanotubes de carbone avec la matrice polymérique dans laquelle on veut les disperser. Cela permet d'obtenir une dispersion homogène et stable des nanotubes de carbone dans une matrice polymérique. Ce procédé est **caractérisé en ce que** les nanotubes de carbone sont utilisés comme support de catalyse grâce à la fixation sur leur surface d'un couple co-catalyseur/catalyseur pour former ainsi un système catalytique. Le système catalytique est activé avant que la polymérisation ne soit réalisée à la surface des nanotubes de carbone afin d'obtenir un enrobage autour de ces nanotubes de carbone.

Néanmoins, le polymère d'enrobage utilisé dans le procédé décrit précédemment fait intervenir un polymère d'enrobage miscible à la matrice polymérique du composite. Or, selon la présente invention, il n'est pas nécessaire, et peut s'avérer même contre-productif, d'utiliser pour la matrice et l'enrobage des polymères miscibles.

### Buts de l'invention

La présente invention vise à fournir une solution qui ne présente pas les inconvénients de l'état de la technique.

En particulier, la présente invention vise à fournir un procédé de dispersion amélioré de nanotubes de carbone dans une matrice polymérique qui est soit non-miscible compatible, soit non-miscible incompatible avec le polymère d'enrobage des nanotubes de carbone.

La présente invention vise également à fournir une utilisation du procédé de dispersion amélioré pour l'obtention d'un nanocomposite dans lequel les nanotubes de carbone sont dispersés de manière homogène à l'échelle nanoscopique dans une matrice polymérique.

### Résumé de l'invention

La présente invention se rapporte à un procédé de dispersion de nanotubes de carbone au sein d'une matrice polymérique d'accueil comprenant les étapes suivantes :
- préparation de nanotubes de carbone enrobés d'un polymère d'enrobage par un procédé de polymérisation d'un monomère à l'aide d'un système catalytique dans lequel on utilise lesdits nanotubes de carbone comme support catalytique, lesdits nanotubes de carbone comprenant en surface ledit système catalytique de polymérisation dudit polymère d'enrobage, ledit polymère d'enrobage étant non-miscible à ladite matrice polymérique d'accueil,
- mélange desdits nanotubes de carbone enrobés à ladite matrice polymérique d'accueil non-miscible, ledit polymère d'enrobage agissant comme transporteur des nanotubes de carbone dans ladite matrice polymérique d'accueil.

On entend par « matrice polymérique d'accueil » un polymère qui forme la matrice d'un composite dans laquelle sont dispersées des particules, encore appelées charges.

Deux polymères sont réputés non-miscibles compatibles ou incompatibles lorsque, à diverses échelles de mesure, on observe un effet de séparation de phase. Cette séparation de phase peut s'observer à l'échelle micrométrique par observation du mélange au microscope électronique à balayage, laissant souvent apparaître des nodules du polymère minoritaire dans le polymère majoritaire. A l'échelle quasi-moléculaire, la non-miscibilité de deux polymères s'observe par la présence de deux températures de transition vitreuse caractéristiques des deux polymères constituant le mélange. Ces transitions vitreuses peuvent être mesurées par des techniques variées comme la calorimétrie différentielle à balayage ou l'analyse mécanique dynamique.

Deux polymères sont réputés non-miscibles lorsque l'énergie libre du mélange (ΔGₘᵢₓ) est supérieure ou égale à zéro.

Deux polymères sont réputés non-miscibles incompatibles lorsque l'énergie libre du mélange est supérieure ou égale à 0, lorsqu'il n'est pas observé de modification des températures de transition vitreuse (T_{g)} respectives des partenaires, lorsque le mélange présente un paramètre χ (chi) de Flory-Huggins supérieur à zéro, et que la tension interfaciale est élevée. La tension interfaciale, qui est proportionnelle au carré du paramètre χ (chi) de Flory-Huggins, est considérée comme « élevée » quand elle est supérieure à 2mN/m.

Deux polymères sont réputés non-miscibles compatibles lorsque l'énergie libre du mélange est supérieure ou égale à 0, lorsqu'il est observé des modifications de températures de transition vitreuse (T_{g)} respectives des partenaires, lorsque le mélange présente un paramètre χ (chi) de Flory-Huggins faible mais supérieur à zéro, et que la tension interfaciale est faible, comprise entre 0 et 2mN/m. La tension interfaciale, qui est proportionnelle au carré du paramètre χ (chi) de Flory-Huggins, est considérée comme « faible » quand elle est comprise entre 0 et 2mN/m.

Pour un mélange polyéthylène/EVA, la tension interfaciale est considérée comme faible quand elle est de l'ordre de 2mN/m et, pour ce qui concerne un mélange polyéthylène/polyamide ou polyéthylène/polycarbonate, elle est considérée comme faible quand elle est supérieure à 2mN/m.

Selon des formes particulières de réalisation, l'invention comporte l'une ou plusieurs des caractéristiques suivantes :
- la matrice polymérique non-miscible compatible est un polymère formant deux phases avec ledit polymère d'enrobage lors du mélange et ayant une énergie libre du mélange (ΔGₘᵢₓ) supérieure à zéro ;
- la matrice polymérique d'accueil non-miscible compatible est sélectionnée parmi le groupe formé par le polypropylène, le copolymère éthylène - acétate de vinyle (EVA), les copolymères d'alpha-oléfine et les mélanges de ceux-ci ;
- la matrice polymérique d'accueil est un polymère non-miscible incompatible, formant deux phases avec ledit polymère d'enrobage et ayant une structure chimique différente de celle dudit polymère d'enrobage, le mélange dudit polymère d'enrobage et de la matrice polymérique d'accueil ayant un paramètre χ (chi) de Flory-Huggins supérieur à zéro et une tension interfaciale élevée.
- la matrice polymérique d'accueil non-miscible incompatible est sélectionnée parmi le groupe formé par les polyamides(PA), le polycarbonate (PC), le poly-éther-éther-cetone (PEEK), le polyétherketone (PEK), le polystyrène, le polyoxyméthylène (POM), le polyéthylèneimine (PEI), le polysulfone (PSU), le polyacétale, le polyétherimide, le polyimide, le polysulfène, le polyacrylonitrile, le poly-phénylène-sulfide, le poly-phénylène oxide, le polyurethane, le poly-tetra-fluoroéthylene, les polyester, le polyvinylidène fluoride, le poly-vinylchloride, le polyéthersulfide, le poly perfluoroaldoxyéthylene, et les mélanges de ceux-ci ;
- le polymère d'enrobage est sélectionné parmi le groupe formé par le polyéthylène, le polypropylène, les co-polymères avec des alpha-oléfines, les polymères d'alpha-dioléfines conjuguées, le polystyrène, les polycycloalcènes, le polynorbornène, le polynorbornadiène, le polycyclopendadiène, et les mélanges de ceux-ci ;
- le polymère d'enrobage est un polymère d'alpha-oléfines ;
- le polymère d'enrobage est du polyéthylène ;
- le polymère d'enrobage des nanotubes de carbone représente en poids entre 10 et 90% du poids total des nanotubes enrobés ;
- la quantité de nanotubes de carbone représente en poids entre 0,1 et 5% du poids total de la matrice polymérique d'accueil ;
- la quantité de nanotubes de carbone représente en poids entre 0,1 et 1% du poids total de la matrice polymérique d'accueil ;
- les nanotubes de carbone sont des nanotubes de carbone multiparois (MWNT).

La présente invention divulgue par ailleurs l'utilisation d'un polymère d'enrobage de nanotubes de carbone non-miscible compatible ou incompatible avec une matrice polymérique d'accueil pour l'obtention d'une dispersion homogène à l'échelle nanoscopique desdits nanotubes de carbone au sein de matrice polymérique d'accueil.

On entend par dispersion des nanotubes de carbone de manière homogène « à l'échelle nanoscopique » une répartition homogène des nanotubes de carbone à l'échelle du milliardième de mètre. Les nanotubes de carbone sont, à cette échelle, essentiellement individualisés les uns des autres et ne forment pratiquement pas d'agglomérats, ni agrégats.

On entend par « nanocomposites » des matériaux composites ayant une matrice polymérique et incorporant des nanoparticules comme charge, à savoir des particules dont au moins une des dimensions est inférieure ou égale à 100nm. Il se peut également qu'au moins l'une des dimensions des particules soit de l'ordre de un à quelques dizaines de milliardième de mètre.

### Brève description des figures

La figure 1 représente les différentes étapes de préparation pour les nanotubes de carbone enrobés avec pour les étapes (i) et (ii), fixation du co-catalyseur (MAO) et évaporation du solvant (toluène), (iii) fixation du catalyseur n-heptane, Cp₂ZrCl₂, (iv) et (v) Polymérisation de l'éthylène à 2.7 bars et 50°C pour donner un enrobage de polyéthylène haute densité.

La figure 2A représente des nanotubes de carbone multiparois purifiés (MWNT = multi-wall nanotubes), observés en microscopie électronique à balayage.

La figure 2B représente des nanotubes de carbone multiparois enrobés de 51% en poids de polyéthylène haute densité, observés en microscopie électronique à balayage.

La figure 2C représente des nanotubes de carbone multiparois enrobés de 83% en poids de polyéthylène haute densité, observés en microscopie électronique à balayage.

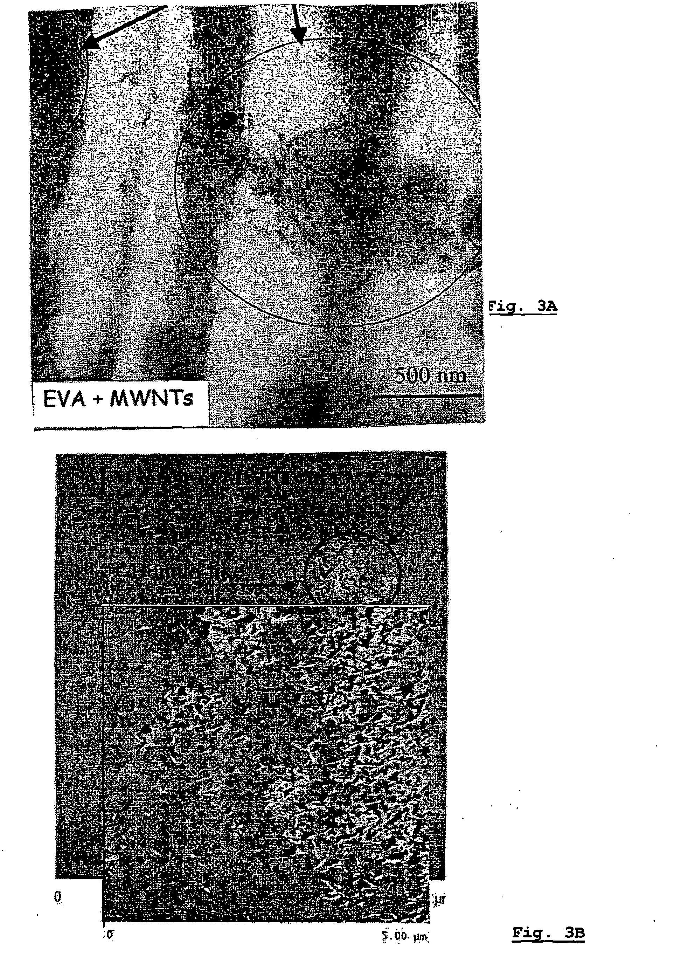

La figure 3A représente des nanotubes de carbone multiparois non enrobés, observés par microscopie électronique à transmission (MET), tels que dispersés dans une matrice copolymère éthylène-acétate de vinyle contenant 28% en poids d'acétate de vinyle (EVA 28). On observe des agrégats de nanotubes de carbone.

La figure 3B représente le même échantillon tel qu'observé par microscopie à force atomique (AFM). Les agrégats de nanotubes de carbone sont aussi observés.

Les figures 4A (MET) et 4B (AFM) représentent des nanotubes multiparois enrobés de polyéthylène haute densité et dispersés à l'échelle nanoscopique de manière homogène dans une matrice d'EVA 28% d'acétate de vinyle.

La figure 5 représente des mesures de résistivité électrique en fonction du taux de charge en carbone de différents nanocomposites à matrice polycarbonate.

La figure 6 représente des mesures de résistivité électrique en fonction du pourcentage en nanotubes de carbone contenus dans des nanocomposites à matrice polycarbonate.

La figure 7 représente une image de microscopie électronique d'un nanocomposite à matrice polycarbonate comprenant 0.25% en poids de nanotubes de carbone qui ont été enrobés d'un polymère de polyéthylène, le polymère d'enrobage représentant en poids 78% du poids total des nanotubes de carbone enrobés.

La figure 8 représente une image de microscopie électronique d'un nanocomposite à matrice polycarbonate comprenant 0.25% en poids de nanotubes de carbone qui ont été enrobés d'un polymère de polyéthylène, le polymère d'enrobage représentant en poids 56% du poids total des nanotubes de carbone enrobés.

La figure 9 représente des mesures de résistivité électrique en fonction du pourcentage de charge de différents nanocomposites.

La figure 10 représente une image de microscopie électronique d'un nanocomposite à matrice polyamide comprenant 1% en poids de nanotubes de carbone qui ont été enrobés d'un polymère de polyéthylène, le polymère d'enrobage représentant en poids 75% du poids total des nanotubes de carbone enrobés.

La figure 11 représente une image de microscopie électronique d'un nanocomposite à matrice polyamide comprenant 5% en poids de nanotubes de carbone qui ont été enrobés d'un polymère de polyéthylène, le polymère d'enrobage représentant en poids 75% du poids total des nanotubes de carbone enrobés.

Les figures 12 et 13 représentent l'influence de la quantité de nanotubes de carbone, dispersés à l'aide du procédé selon l'invention ou dispersés de manière ordinaire, sur la viscosité d'une matrice polypropylène ou polycarbonate.

Les figures 14 et 15 représentent l'influence de la quantité de nanotubes de carbone, dispersés à l'aide du procédé selon l'invention ou dispersés de manière ordinaire, sur le module de traction d'une matrice polycarbonate ou polyamide.

Les figures 16 et 17 représentent l'influence de la quantité de nanotubes de carbone, dispersés à l'aide du procédé selon l'invention ou dispersés de manière ordinaire, sur les caractéristiques de déformation et d'élongation à la rupture d'une matrice polycarbonate ou polyamide.

Les figures 18 et 19 représentent l'influence de la quantité de nanotubes de carbone, dispersés à l'aide du procédé selon l'invention ou dispersés de manière ordinaire, sur les caractéristiques de résistance à la rupture d'une matrice polycarbonate ou polyamide.

Les figures 20 et 21 représentent l'influence de la quantité de nanotubes de carbone, dispersés à l'aide du procédé selon l'invention ou dispersés de manière ordinaire, sur les caractéristiques de résistance à l'impact d'une matrice polycarbonate ou polyamide.

### Description détaillée de l'invention

L'utilisation d'un enrobage pour obtenir des nanotubes de carbone à l'état dispersé au sein d'une matrice polymère est bien connue.

L'originalité de la présente invention repose sur l'emploi d'un polymère d'enrobage des nanotubes de carbone qui soit non-miscible compatible ou incompatible à la matrice polymérique. De façon surprenante, cela permet d'obtenir une dispersion des nanotubes de carbone au sein de ladite matrice polymérique qui est homogène à l'échelle nanoscopique. De plus, cela permet d'améliorer les caractéristiques électriques des nanocomposites comprenant des nanotubes de carbone dispersés selon l'invention, tout en conservant les propriétés mécaniques de la matrice polymérique formant ces nanocomposites.

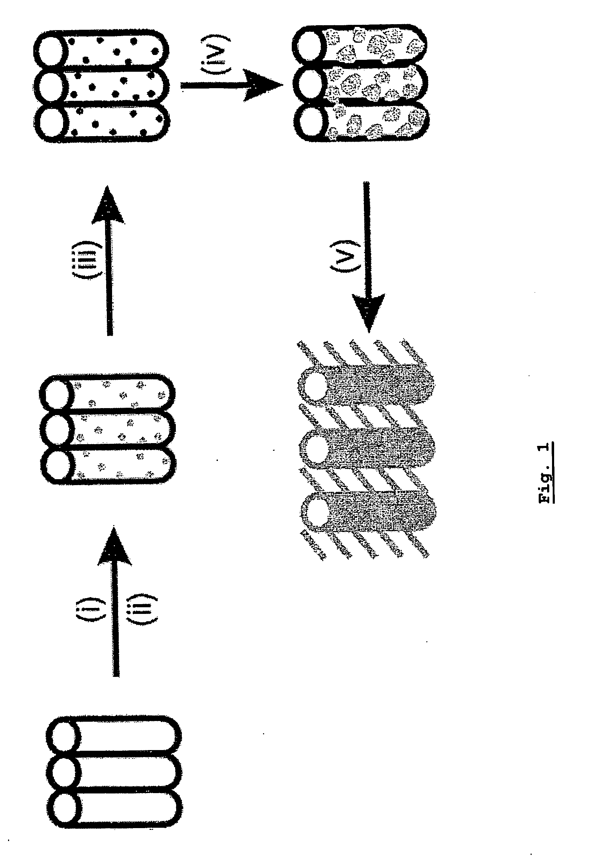

Le procédé d'enrobage des nanotubes de carbone du procédé de dispersion selon l'invention peut être celui connu sous le nom de « Polymerization-Filling Technique » ou « PFT » (Fig. 1) et qui est décrit en détail dans le document WO 2005/012170 qui est incorporé par référence au présent texte.

L'enrobage utilisé dans la présente invention peut être celui revendiqué à la revendication 1 du document WO 2005/012170.

De préférence, les nanotubes de carbone sont prétraités de la façon décrite à la revendication 2, ainsi qu'aux paragraphes 97 et 98 et les paragraphes 116 à 125 du document WO 2005/012170. Le prétraitement consiste à fixer à la surface des nanotubes de carbone un catalyseur, connu pour catalyser la polymérisation du monomère servant à l'enrobage, la polymérisation est ensuite amorcée directement à la surface des nanotubes.

De préférence, le catalyseur et le couple catalyseur/co-catalyseur sont choisis conformément aux revendications 6 à 9 du document WO 2005/012170 et avantageusement conformément aux exemples donnés aux paragraphes 104 à 106 et la polymérisation du polymère d'enrobage peut être réalisée conformément au procédé décrit aux paragraphes 126-130 du document WO 2005/012170.

La polymérisation, effectuée à la surface des nanotubes afin d'obtenir un polymère d'enrobage, permet la désagrégation des fagots, des agglomérats ou des agrégats de nanotubes qui se forment habituellement lors de la production de nanocomposites comprenant des nanotubes de carbone. Cet enrobage a pour effet de forcer les nanotubes de carbone à se séparer les uns des autres et à provoquer ainsi la désagrégation des fagots de nanotubes.

Une fois enrobés, même avec une faible quantité de polymère, les nanotubes de carbone peuvent être alors dispersés dans un polymère d'accueil disponible dans le commerce par des méthodes classiques (mélangeur interne, extrudeuse, ...). La dispersion obtenue est homogène à l'échelle nanoscopique.

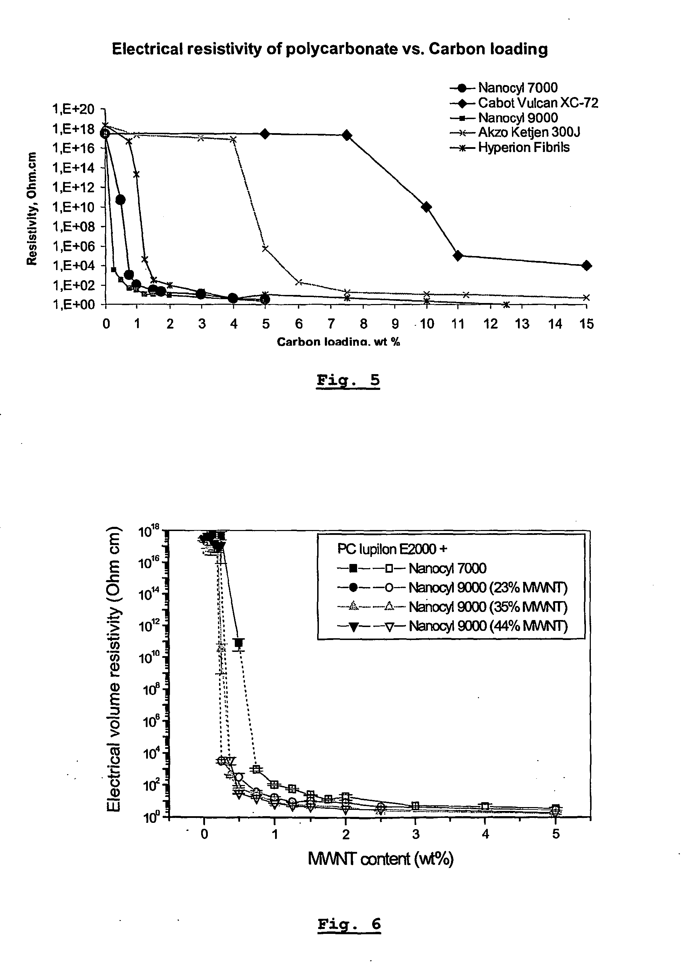

De façon surprenante, et comme le montre la figure 5, le nanocomposite à matrice polycarbonate, dont les nanotubes de carbone enrobés de polyéthylène ont été dispersés à l'aide du procédé selon l'invention (N9000, Fig.5), présente une résistivité électrique plus basse, et donc une meilleure conductivité électrique, qu'un nanocomposite dont les nanotubes de carbone non pas été enrobés (N7000, Fig.5) et que des compostions comprenant d'autres types de charges carbonées (Cabot Vulcan, Akzo Ketjen, Hyperion Fibrils).

De plus, les nanocomposites comprenant des nanotubes de carbone, dispersés à l'aide du procédé selon l'invention, possèdent une conductivité électrique équivalente aux composites décrit dans l'état de la technique, cependant cette conductivité électrique est obtenue avec une quantité de nanotubes de carbone bien inférieure à celle requise dans le cas des nanocomposites de l'état de la technique. En effet, alors qu'il fallait 1% en poids de nanotubes de carbone (MWNT N7000, Fig. 6) pour obtenir une résistivité électrique donnée, il n'en faut maintenant plus que 0.25% pour obtenir la même valeur de résistivité électrique (Fig. 6). Ainsi donc, dans les nanocomposites comprenant des nanotubes de carbone dispersés à l'aide du procédé selon l'invention, le réseau de percolation est établi avec un pourcentage de nanotubes de carbone bien inférieur. L'emploi d'un faible taux de nanotubes de carbone s'avère très intéressant car cela permet non seulement de diminuer le coût de fabrication de tels nanocomposites, mais aussi d'améliorer les propriétés électriques, tout en conservant les propriétés mécanique de la matrice polymérique.

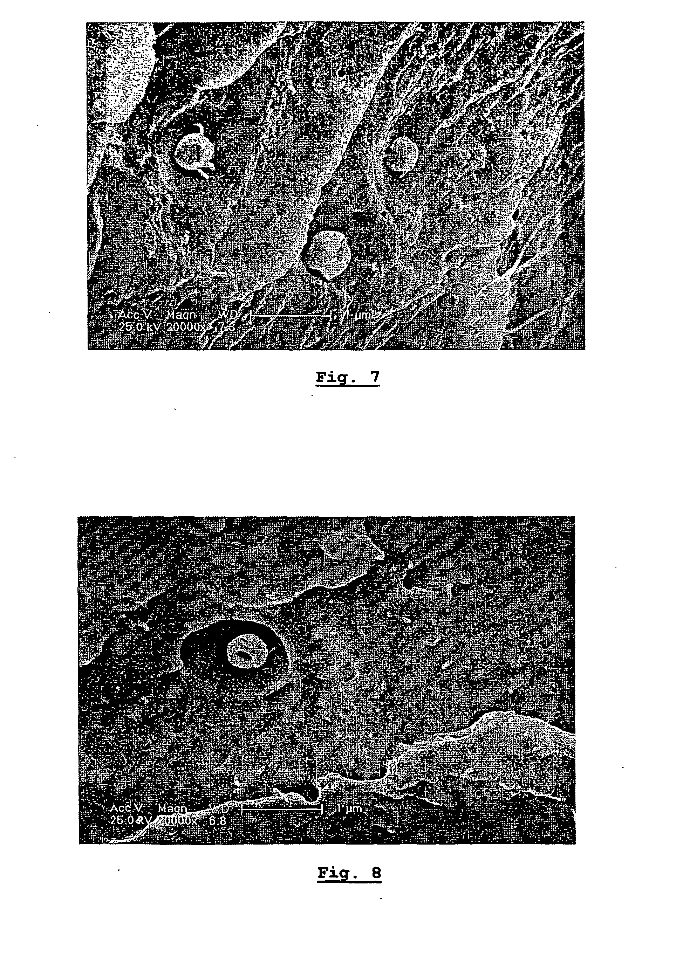

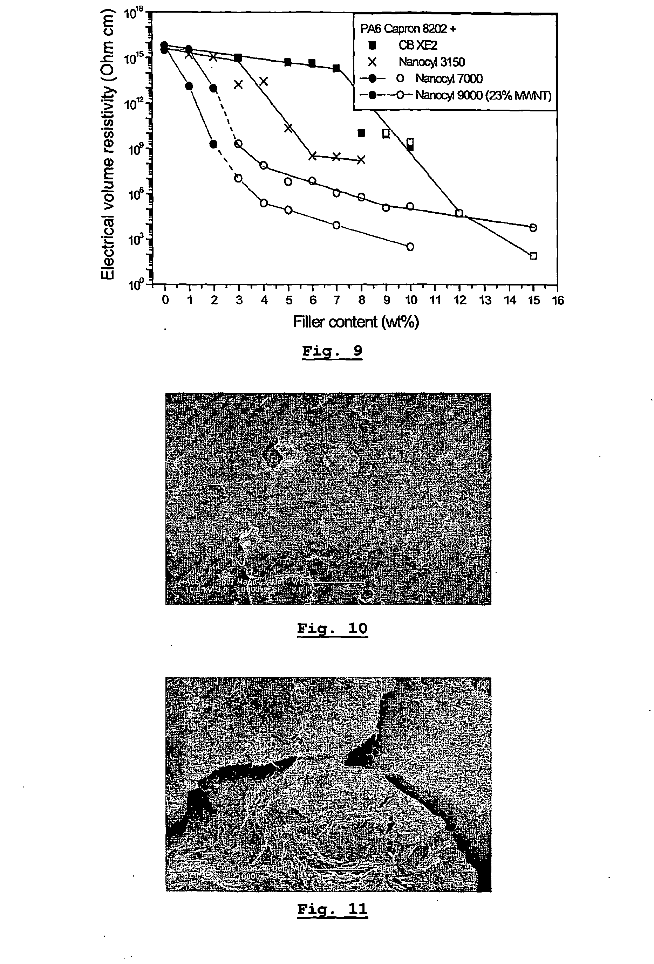

L'amélioration surprenante des propriétés de conductivité électrique, observée pour un nanocomposite dont les nanotubes de carbone ont été dispersés à l'aide du procédé selon l'invention, réside dans l'emploi pour l'enrobage d'un polymère qui est non-miscible compatible ou incompatible avec la matrice polymérique du composite. Cette non-miscibilité ou incompatibilité entre polymère d'enrobage et matrice polymérique va permettre à l'enrobage de jouer le rôle d'un « transporteur de nanotubes de carbone » et ainsi donner lieu à une dispersion homogène. L'enrobage, et plus particulièrement la polymérisation du polymère d'enrobage réalisée à la surface des nanotubes, va permettre d'individualiser chaque nanotube de carbone. Puis, lors de l'incorporation de ces nanotubes de carbone à la matrice polymérique, l'enrobage, du fait de sa non-miscibilité (compatible ou incompatible) et du fait qu'il ne soit pas lié de façon covalente aux nanotubes de carbone, va être littéralement « chassé » de la surface des nanotubes de carbone. Ainsi donc, comme le montrent les figures 7 et 8, ainsi que les figures 10 et 11, les nanotubes de carbone se retrouvent sans enrobage, mais néanmoins parfaitement dispersés au sein de la matrice polymérique, alors que le polyéthylène, ayant servi pour l'enrobage, se trouve sous la forme de gouttelettes. Comme le montre la figure 7, ces gouttelettes de polyéthylène peuvent encore contenir des nanotubes de carbone enrobés, cependant leur proportion est infime par rapport à la quantité totale de nanotube de carbone du nanocomposite.

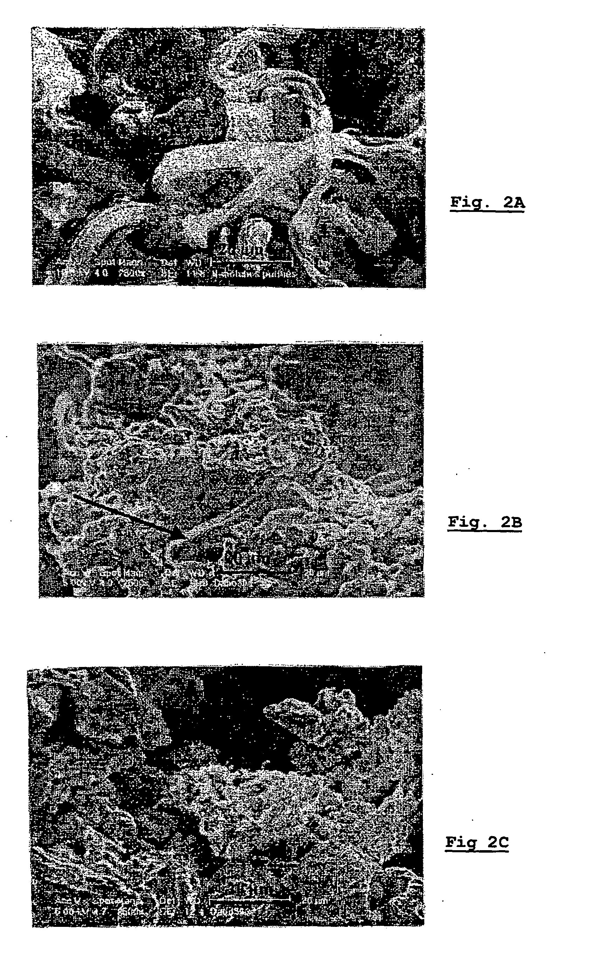

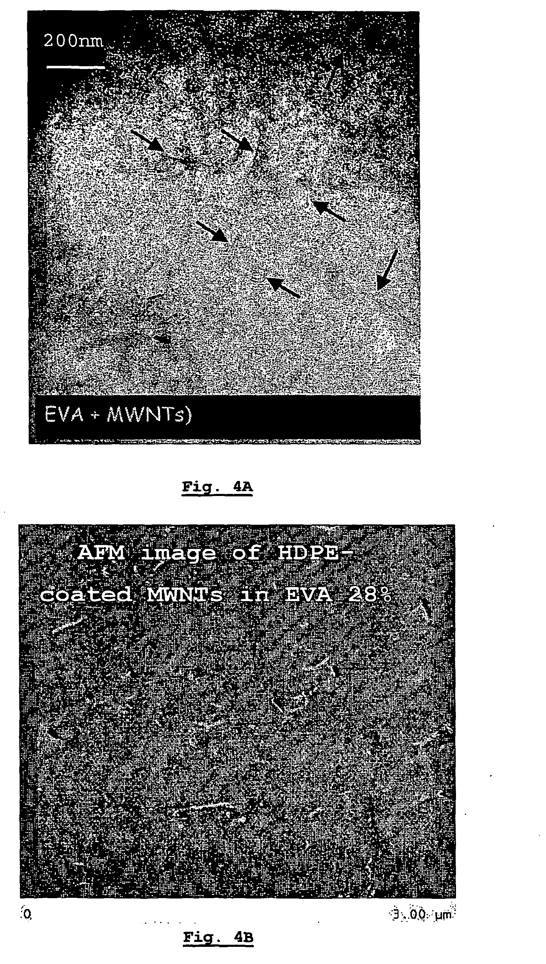

Dans un premier exemple de réalisation de l'invention, les nanotubes de carbone multiparois (MWNT) sont enrobés de'polyéthylène de haute densité (HDPE) (Fig. 2B & 2C) et ils sont incorporés à une matrice polymérique qui est un copolymère éthylène-acétate de vinyle (EVA) à haute teneur en acétate de vinyle (28% en poids) (Fig. 4A & 4B).

L'aspect non-miscible et compatible du HDPE et de l'EVA à température ambiante a fait l'objet de nombreuses études et est notamment documentée dans le « Polymer Handbook », 4th edition, Ed. J.Wiley and sons, New-York, 1999, dont les auteurs sont J. Bandrup, E. H. Immergut et E. A. Grulke.

La non-miscibilité entre l'EVA et le HDPE sont documentées en détail dans les trois publications suivantes :
- « Dynamic mechanical properties and morphology of polyethylene/ethylene vinyl acetate copolymer blends », Khonakdar, Wagenknecht, Jafari, Hässler et Eslami, dans Advances in Polymer Technology, Vol.23, N°4, 307-315;
- « Phase morphology and melt viscoelastic properties in blends of ethylene/vinyl acetate copolymer and metallocece-catalysed linear polyethylene », Péon, Vega, Del Amo et Martinez dans Polymer 44 (2003), 2911-2918 ;
- « Dynamic Mechanical behaviour of High-Density polyethylene/ethylene vinyl acetate copolymer blends: The effect of the blend ratio, reactive compatibilization, and dynamic vulcanization », Biju, Varughese, Oommen, Pötschke et Thomas dans Journal of Applied Polymer Science, Vol 87, 2083-2099 (2003).

Par ailleurs, l'utilisation du couple HDPE et EVA (28% VA) a permis d'effectuer des essais de dispersion de nanotubes enrobés de HDPE dans la matrice EVA à différentes températures, permettant aux deux polymères soit de se retrouver tous les deux à l'état fondu soit pour le HDPE d'être toujours à l'état solide et pour la matrice EVA à l'état fondu. La différence de température de fusion entre le HDPE d'enrobage et la matrice EVA (28%VA) étant d'environ 40°C.

Les essais de dispersion à deux températures différentes ont cependant donné le même résultat au niveau de la dispersion des nanotubes de carbone à l'échelle nanoscopique (Fig. 4B). On constate donc de manière surprenante que la dispersion se fait également à l'échelle nanoscopique dans une matrice d'EVA à haute teneur en acétate de vinyle alors que l'on se serait attendu, à la lumière de la non-miscibilité entre les deux polymères, à retrouver des agrégats de nanotubes par coalescence des enrobages de HDPE, ce qui n'est pas le cas.

Pour les composites à base d'EVA (28% en poids en acétate de vinyle), les propriétés mécaniques sont comparées à celles d'un nanocomposite à base d'argile (Cl 30B : montmorillonite organo-modifiée par le méthyl bis (2-hydroxyéthyl) suif ammonium) de type exfolié (nanofeuillets d'argile dispersés de manière homogène à l'état nanoscopique) - voir tableau I.

**Tableau I**

| | Module Young (MPa) |
|---|---|
| E_{V}A seul | 11.9 |
| EVA + 1% Cl. 30B | 16.0 |
| EVA + 3% Cl. 30B | 22.8 |
| EVA + 1% MWNT | 15.8 |
| EVA +3% MWNT | 20.0 |
| EVA +3% MWNT* | 29.0 |
| EVA + 3% Cl. 30B/%MWNT | 26.0 |
| EVA + 3% Cl. 30B/%MWNT* | 35.4 |

| | |
|---|---|
| *HDPE (45%)- MWNT enrobés via PFT MWNT = nanotubes multiparois | |

Ces résultats montrent le transfert des propriétés des nanotubes de carbone, qui ont été enrobés de HDPE, à la matrice d'EVA. Comparativement aux nanocomposites à base d'argile, les nanotubes de carbone qui ont été enrobés montrent une augmentation du module de Young, ce qui indique un excellent transfert des propriétés de rigidité des nanotubes de carbone vers la matrice EVA.

Dans un deuxième exemple de réalisation de l'invention, les nanotubes de carbone multiparois (MWNTs) sont enrobés d'un polymère polyéthylène et sont incorporés à une matrice polycarbonate (Iupilon E 2000 - Mitsubishi Plastics, Japon).

Le polycarbonate et les nanotubes de carbone multiparois sont pré-mélangés sous forme de poudre, le polycarbonate étant séché à 120°C pendant au moins 4 heures, avant d'effectuer un mélange à chaud (280°C) avec un mélangeur DACA Micro Compounder pendant 15 minutes à 50 tours par minute. Les plaques, obtenues après un pressage à 280°C, ont une épaisseur de 0,35mm et un diamètre supérieur à 65mm.

De façon surprenante, et comme le montre le graphique de la figure 6, pour le nanocomposite à matrice polycarbonate, le réseau de percolation s'établit avec 0.25% en poids de nanotubes de carbone qui ont été enrobés, l'enrobage de polyéthylène haute densité (HDPE) représentant en poids 78% ou 65% du poids total des nanotubes enrobés. Pour les nanotubes de carbone dont l'enrobage de HDPE représente en poids 56% du poids total des nanotubes enrobés, la percolation est obtenue avec un pourcentage de nanotubes de carbone qui est de 0.375%, alors que pour des nanotubes non enrobés (N7000, Fig. 5), le seuil de percolation se situe à 0.75%.

Ainsi donc, la quantité de polymère d'enrobage des nanotubes influence la qualité de la dispersion des nanotubes de carbone au sein de la matrice, et par conséquent, influence les caractéristiques de conductivité électrique du nanocomposite ; en effet, pour un composite à matrice polycarbonate comprenant 0.25% en poids de MWNT enrobés puis dispersés à l'aide du procédé selon l'invention, l'utilisation d'un enrobage de polyéthylène, représentant en poids 78% du poids total des nanotubes de carbone enrobés, permet d'obtenir un nanocomposite présentant une meilleure conductivité électrique qu'un nanocomposite où l'enrobage ne représente en poids que 56% du poids total des nanotubes de carbone enrobés.

Comme le montrent les images de microscopie électronique (Fig. 7 & 8), un nanocomposite, qui comprend une matrice polycarbonate et 0.25% en poids de MWNT enrobés de polyéthylène et dispersés à l'aide du procédé selon l'invention, présente à l'échelle nanoscopique une dispersion fine et homogène des nanotubes de carbone dans la matrice polymérique.

Dans un troisième exemple de réalisation de l'invention, les nanotubes de carbone multiparois (MWNTs) sont enrobés de polyéthylène haute densité et sont dispersés à l'aide du procédé selon l'invention dans une matrice polyamide (Capron 8202).

Le polyamide et les nanotubes de carbone multiparois sont mélangés à chaud (240°C) avec un mélangeur DACA Micro Compounder pendant 15 minutes à 50 tours par minute. Les plaques, obtenues après un pressage à 240°C, ont une épaisseur de 0,6mm et un diamètre supérieur à 65mm.

Comme le montre la figure 9, le nanocomposite à matrice polyamide, comprenant des nanotubes de carbone enrobés et dispersés à l'aide du procédé selon l'invention, et dont l'enrobage de polyéthylène représente en poids 78% du poids total des nanotubes enrobés, présente une meilleure conductivité électrique que les composites comprenant des nanotubes de carbone non-enrobés (N7000, qui sont des MWNTs à 90% de carbone et N3150, qui sont des MWNTs à 95% de carbone) ou simplement du noir de carbone (Printex XE2). Pour le nanocomposite comprenant les nanotubes de carbone qui ont été dispersés à l'aide du procédé selon l'invention, le réseau de percolation est établi avec 2% en poids de nanotubes de carbone.

Comme le montre la figure 10, un nanocomposite comprenant une matrice polyamide et 1 % en poids de MWNT enrobés par du polyéthylène et dispersés à l'aide du procédé selon l'invention, présente à l'échelle nanoscopique une dispersion fine et homogène des nanotubes de carbone dans la matrice polymérique. Toutefois, comme le montre la figure 11, pour un nanocomposite comprenant 5 % en poids de MWNT enrobés par du polyéthylène, on commence à observer un début de formation d'une structure lamellaire qui peut s'avérer néfaste à l'établissement du réseau de percolation.

Dans un quatrième exemple de réalisation de l'invention, les nanotubes de carbone multiparois (MWNTs) sont enrobés de polyéthylène haute densité et sont dispersés à l'aide du procédé selon l'invention dans une matrice PEEK.

Le Tableau II représente l'influence des nanotubes de carbone, dispersés à l'aide du procédé selon l'invention ou dispersés de manière ordinaire, sur le comportement du nanocomposite soumis au test du module de traction et test du module de flexion.

**Tableau II**

| | Module de traction (MPa) | Module de flexion (MPa) |
|---|---|---|
| PEEK | 3900 | 4250 |
| PEEK + 5% MWCNT | 4750 | 4700 |
| PEEK + 1.5 % MWCNT enrobés | 4800 | 4950 |

Comme le montre ce tableau, après les étapes successives d'extrusion, d'injection et de moulage, le nanocomposite à matrice PEEK ainsi obtenu et qui comprend 1,5%wt en poids de nanotubes de carbone multiparois enrobés (Tableau II) présente des performances lors du test de module de traction comparables à celles obtenues avec un nanocomposite à matrice PEEK comprenant 5%wt en poids de nanotubes multiparois non enrobés (Tableau II). Cette observation est également valable en ce qui concerne les résultats obtenus lors du test du module de flexion.

Dans les quatre exemples de réalisation de l'invention décrits précédemment, l'enrobage des nanotubes de carbone peut être réalisé selon la méthode décrite dans le document WO 2005/012170.

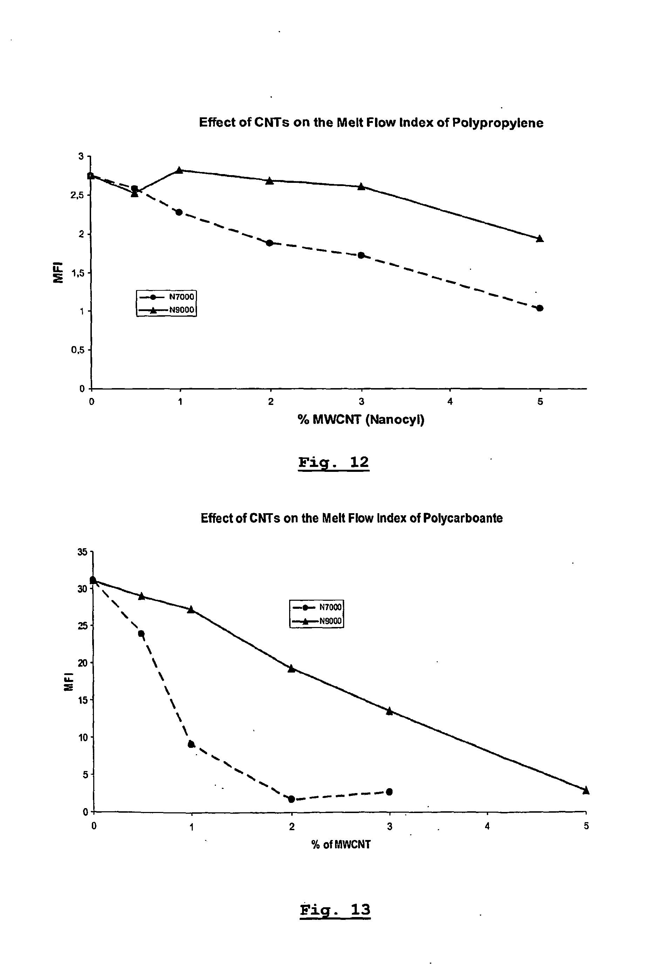

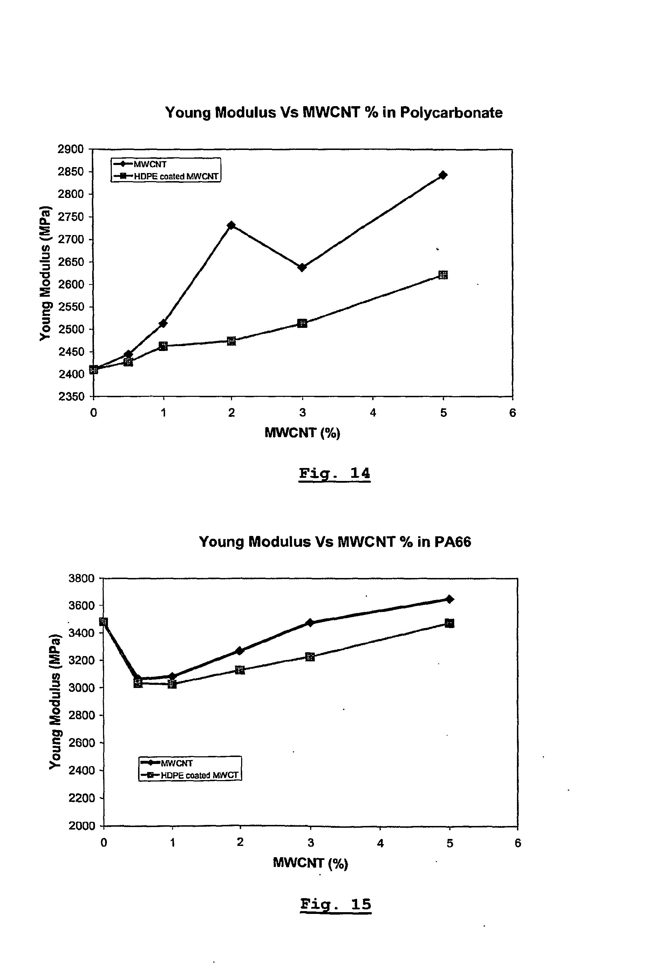

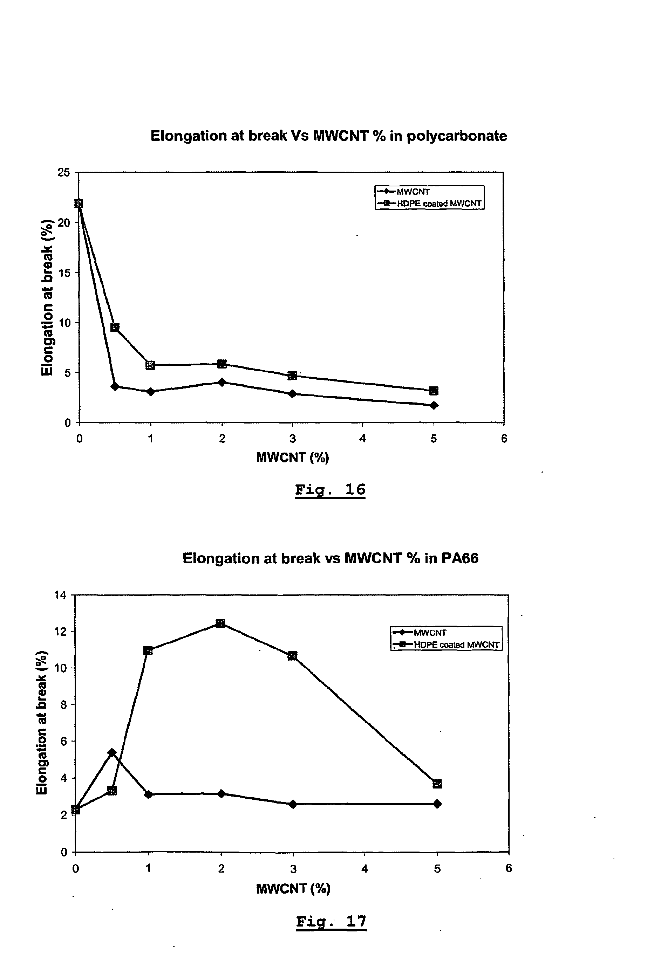

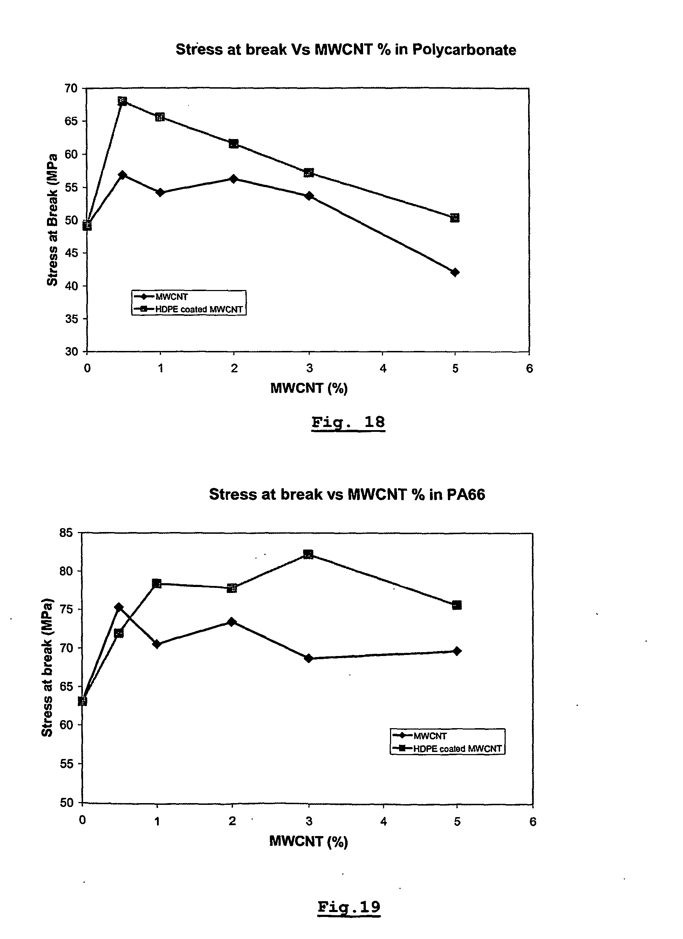

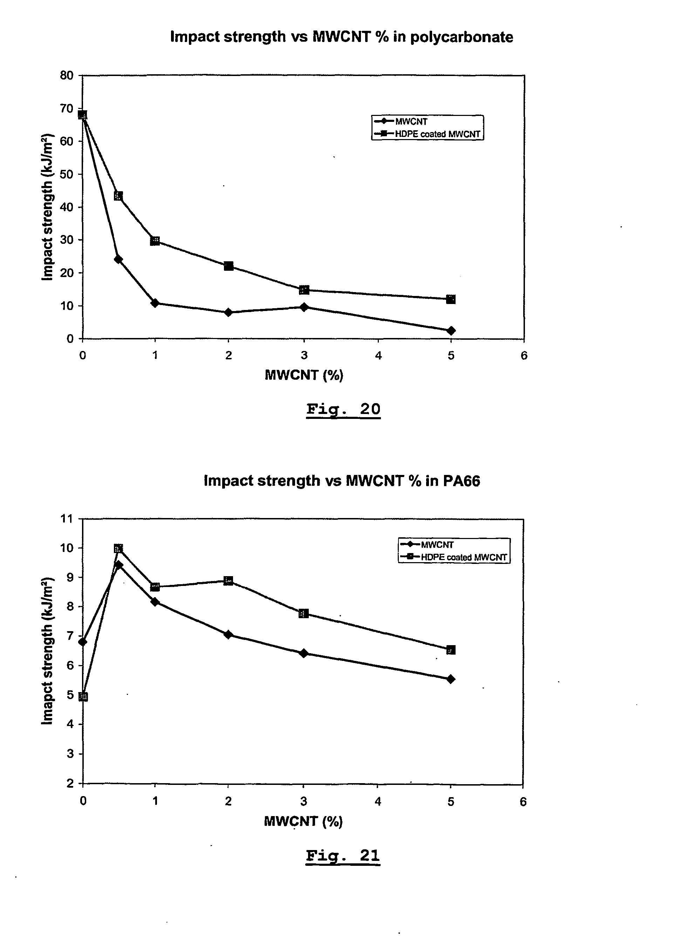

La dispersion des nanotubes de carbone selon l'invention procure des propriétés particulières aux matrices polymériques auxquelles ils sont incorporés. Comme le montrent les figures 12 et 13, le procédé de dispersion des nanotubes de carbone selon l'invention influence la viscosité d'un nanocomposite à matrice polypropylène ou polycarbonate, mais, pour un nanocomposite à matrice polycarbonate ou polyamide, il influence également les propriétés d'élasticité, à savoir le module de traction (Fig. 14 & 15), les caractéristiques de déformation à la rupture (Fig. 16 & 17) et les caractéristiques de résistance à la rupture (Fig. 18 & 19), ainsi que les propriétés de résistance à l'impact (Fig. 20 & 21).

## Revendications

1. Procédé de dispersion à l'échelle nanoscopique de nanotubes de carbone au sein d'une matrice polymérique d'accueil comprenant les étapes suivantes :
- préparation de nanotubes de carbone enrobés d'un polymère d'enrobage par un procédé de polymérisation d'un monomère à l'aide d'un système catalytique dans lequel on utilise lesdits nanotubes de carbone comme support catalytique, lesdits nanotubes de carbone comprenant en surface ledit système catalytique de polymérisation dudit polymère d'enrobage, ledit polymère d'enrobage étant non-miscible à ladite matrice polymérique d'accueil, la non-miscibilité étant définie dans la description ;
- mélange desdits nanotubes de carbone enrobés à ladite matrice polymérique d'accueil non-miscible, ledit polymère d'enrobage agissant comme transporteur des nanotubes de carbones dans ladite matrice polymérique d'accueil.

2. Procédé de dispersion selon la revendication 1, dans lequel la matrice polymérique d'accueil est un polymère non-miscible compatible formant deux phases avec ledit polymère d'enrobage lors du mélange et ayant une énergie libre du mélange (ΔGₘᵢₓ) supérieure à zéro.

3. Procédé de dispersion selon les revendications 1 ou 2, dans lequel la matrice polymérique d'accueil non-miscible compatible est sélectionnée parmi le groupe formé par le polypropylène, le copolymère éthylène - acétate de vinyle (EVA), les copolymères d'alpha-oléfine et les mélanges de ceux-ci.

4. Procédé de dispersion selon **la revendication 1,** dans lequel la matrice polymérique d'accueil est un polymère non-miscible incompatible, formant deux phases avec ledit polymère d'enrobage et ayant une structure chimique différente de celle dudit polymère d'enrobage, le mélange dudit polymère d'enrobage et de la matrice polymérique d'accueil ayant un paramètre χ (chi) de Flory-Huggins supérieur à zéro et une tension interfaciale élevée.

5. Procédé de dispersion selon **la revendication 1**, dans lequel la matrice polymérique d'accueil non-miscible incompatible est sélectionnée parmi le groupe formé par les polyamides(PA), le polycarbonate (PC), le poly-éther-éther-cetone (PEEK), le polyétherketone (PEK), le polystyrène, le polyoxyméthylène (POM), le polyéthylèneimine (PEI), le polysulfone (PSU), le polyacétale, le polyétherimide, le polyimide, le polysulfène, le polyacrylonitrile, le poly-phénylène-sulfide, le poly-phénylène oxide, les polyurethanes, le poly-tetra-fluoroéthylene, les polyesters, le polyvinylidène fluoride, le poly-vinylchloride, le polyéthersulfide, le poly perfluoroaldoxyéthylene, et les mélanges de ceux-ci.

6. Procédé de dispersion selon l'une quelconque des revendications précédentes, dans lequel le polymère d'enrobage est sélectionné parmi le groupe formé par le polyéthylène, le polypropylène, les co-polymères avec des alpha-oléfines, les polymères d'alpha-dioléfines conjuguées, le polystyrène, les polycycloalcènes, le polynorbornène, le polynorbornadiène, le polycyclopendadiène, et les mélanges de ceux-ci.

7. Procédé de dispersion selon la revendication 6, dans lequel le polymère d'enrobage est un polymère d'alpha-oléfines.

8. Procédé de dispersion selon la revendication 7, dans lequel le polymère d'enrobage est du polyéthylène.

9. Procédé de dispersion selon l'une quelconque des revendications précédentes, dans lequel le polymère d'enrobage des nanotubes de carbone représente en poids entre 10 et 90% du poids total des nanotubes enrobés.

10. Procédé de dispersion selon l'une quelconque des revendications précédentes, dans lequel la quantité de nanotubes de carbone représente en poids entre 0,1 et 5% du poids total de la matrice polymérique d'accueil.

11. Procédé de dispersion selon la revendication 10, dans lequel la quantité de nanotubes de carbone représente en poids entre 0,1 et 1% du poids total de la matrice polymérique d'accueil.

12. Procédé de dispersion selon l'une quelconque des revendications précédentes, dans lequel les nanotubes de carbone sont des nanotubes de carbone multiparois (MWNT).

13. Utilisation d'un polymère d'enrobage de nanotubes de carbone non-miscible compatible ou incompatible avec une matrice polymérique d'accueil pour l'obtention d'une dispersion homogène à l'échelle nanoscopique desdits nanotubes de carbone au sein d'une matrice polymérique d'accueil.

## Claims

1. Method for dispersing carbon nanotubes on a nanoscopic scale within a host polymer matrix comprising the following steps:
- preparation of coated carbon nanotubes, said nanotubes being coated with a coating polymer in a polymerisation process of a monomer by means of a catalytic system in which said carbon nanotubes are used as catalytic support, said carbon nanotubes comprising at their surfaces said catalytic system for the polymerisation of said coating polymer, said coating polymer being non-miscible with said host polymer matrix, the non-miscibility being defined in the description;
- mixing of said coated carbon nanotubes with said non-miscible host polymer matrix, said coating polymer acting as a transporter of the carbon nanotubes in said host polymer matrix.

2. Dispersion method as in Claim 1, wherein the host polymer matrix is a non-miscible compatible polymer forming two phases with said coating polymer during mixing and having a free energy of the mixture (ΔGₘᵢₓ) greater than zero.

3. Dispersion method as in Claim 1 or 2 wherein the non-miscible compatible host polymer matrix is selected from the group consisting of polypropylene, ethylene vinyl acetate (EVA) copolymer, alpha-olefin copolymers and mixtures thereof.

4. Dispersion method as in Claim 1, wherein the host polymer matrix is a non-miscible incompatible polymer, forming two phases with said coating polymer and having a different chemical structure to that of said coating polymer, the mixture of said coating polymer and of the host polymer matrix having a Flory-Huggins parameter χ (chi) greater than zero and a high interface tension.

5. Dispersion method as in Claim 1, wherein the non-miscible incompatible host polymer matrix is selected from the group consisting of polyamides (PA), polycarbonate (PC), polyether ether ketone (PEEK), polyether ketone (PEK), polystyrene, polyoxymethylene (POM), polyethyleneimine (PEI), polysulphone (PSU), polyacetale, polyetherimide, polyimide, polysulfene, polyacrylonitrile, poly-phenylsulfide, polyphenyl oxyde, polyurethanes, polytetrafluoroethylene, polyesters, poly-vinylidene fluoride, polyvinylchloride, polyethersulfide, poly perfluoroaldoxyethylene and mixtures thereof.

6. Dispersion method as in any of the previous claims, wherein the coating polymer is selected from the group consisting of polyethylene, polypropylene, copolymers with alpha-olefins, conjugated alpha-diolefin polymers, polystyrene, polycycloalkenes, polynorbornene, polynorbornadiene, polycyclopendadiene and mixtures thereof.

7. Dispersion method as in Claim 6, wherein the coating polymer is an alpha-olefin polymer.

8. Dispersion method as in Claim 7, wherein the coating polymer is polyethylene.

9. Dispersion method as in any of the previous claims, wherein the polymer for coating the carbon nanotubes is between 10 and 90% by weight of the total weight of the coated nanotubes.

10. Dispersion method as in any of the previous claims, wherein the quantity of carbon nanotubes is between 0.1 and 5% by weight of the total weight of the host polymer matrix.

11. Dispersion method as in Claim 10, wherein the quantity of carbon nanotubes is between 0.1 and 1% by weight of the total weight of the host polymer matrix.

12. Dispersion method as in any of the previous claims, wherein the carbon nanotubes are multi-wall carbon nanotubes (MWNTs).

13. Use of a polymer for coating non-miscible carbon nanotubes compatible or incompatible with a host polymer matrix in order to obtain a homogeneous dispersion of said carbon nanotubes within a host polymer matrix on a nanoscopic scale.

## Patentansprüche

1. Verfahren für die Verteilung von Kohlenstoffnanoröhren in einer Polymeraufnahmematrix auf Nanoebene, das folgende Schritte umfasst:
- Vorbehandlung von Kohlenstoffnanoröhren, die in einem Polymerisationsverfahren eines Monomers mit Hilfe eines katalytischen Systems, bei dem die besagten Kohlenstoffnanoröhren als Katalysatorträger verwendet werden, von einem Ummantelungspolymer umhüllt werden, wobei die besagten Kohlenstoffnanoröhren an der Oberfläche das besagte Katalysatorsystem für die Polymerisation des besagten Ummantelungspolymers aufweisen; das besagte Ummantelungspolymer ist dabei nicht mit der besagten Polymeraufnahmematrix mischbar, wobei die Nichtmischbarkeit in der Beschreibung definiert ist;
- Mischen der besagten ummantelten Kohlenstoffnanoröhren mit der besagten nicht mischbaren Polymeraufnahmematrix, wobei das besagte Ummantelungspolymer als Transportträger der Kohlenstoffnanoröhren in der besagten Polymeraufnahmematrix dient.

2. Verfahren für die Verteilung laut Anspruch 1, bei dem die Polymeraufnahmematrix ein kompatibles nicht mischbares Polymer ist, das beim Vermischen zwei Phasen mit dem besagten Ummantelungspolymer bildet und eine freie Mischungsenergie (ΔGₘᵢₓ) größer als Null aufweist.

3. Verfahren für die Verteilung gemäß Anspruch 1 oder 2, bei dem die kompatible, nicht mischbare Polymeraufnahmematrix aus der Gruppe gewählt wird, die aus Polypropylen, Ethylen-Vinylacetat-Copolymer (EVA), Alpha-Olefin-Copolymeren und Mischungen derselben besteht.

4. Verfahren für die Verteilung gemäß Anspruch 1, bei dem die Polymeraufnahmematrix ein inkompatibles, nicht mischbares Polymer ist, das zwei Phasen mit dem besagten Ummantelungspolymer bildet und eine andere chemische Struktur als das besagte Ummantelungspolymer aufweist, wobei die Mischung des besagten Ummantelungspolymers und der Polymeraufnahmematrix einen Flory-Huggins-Parameter χ (chi) größer als Null und eine hohe Grenzflächenspannung aufweist.

5. Verfahren für die Verteilung gemäß Anspruch 1, bei dem die nicht mischbare, inkompatible Polymeraufnahmematrix aus der Gruppe ausgewählt wird, die aus Polyamiden (PA), Polycarbonat (PC), Polyetheretherketon (PEEK), Polyetherketon (PEK), Polystyren, Polyoxymethylen (POM), Polyethylenimin (PEI), Polysulfon (PSU), Polyacetal, Polyetherimid, Polyimid, Polysulfen, Polyacrylnitril, Polyphenylensulfid, Polyphenylenoxid, Polyurethanen, Polytetrafluorethylen, Polyestern, Polyvinylidenfluorid, Polyvinylchlorid, Polyethersulfid, Polyperfluoraldoxyethylen, und Mischungen derselben besteht.

6. Verfahren für die Verteilung gemäß einem der vorstehenden Ansprüche, bei dem das Ummantelungspolymer aus der Gruppe ausgewählt wird, die von Polyethylen, Polypropylen, Copolymeren mit Alphaolefinen, konjugierten Alphadiolefinpolymeren, Polystyren, Polycycloalkenen, Polynorbornen, Polynorbornadien, Polycyclopendadien und Mischungen derselben gebildet wird.

7. Verfahren für die Verteilung gemäß Anspruch 6, bei dem das Ummantelungspolymer ein Alphaolefinpolymer ist.

8. Verfahren für die Verteilung gemäß Anspruch 7, bei dem das Ummantelungspolymer Polyethylen ist.

9. Verfahren für die Verteilung gemäß einem der vorstehenden Ansprüche, bei dem das Ummantelungspolymer der Kohlenstoffnanoröhren einen Gewichtsanteil von 10 bis 90% vom Gesamtgewicht der ummantelten Nanoröhren ausmacht.

10. Verfahren für die Verteilung gemäß einem der vorstehenden Ansprüche, bei dem die Menge der Kohlenstoffnanoröhren einen Gewichtsanteil von 0,1 bis 5% vom Gesamtgewicht der Polymeraufnahmematrix ausmacht.

11. Verfahren für die Verteilung gemäß Anspruch 10, bei dem die Menge der Kohlenstoffnanoröhren einen Gewichtsanteil von 0,1 bis 1% vom Gesamtgewicht der Polymeraufnahmematrix ausmacht.

12. Verfahren für die Verteilung gemäß einem der vorstehenden Ansprüche, bei dem die Kohlenstoffnanoröhren Mehrwand-Kohlenstoffnanoröhren (MWNT) sind.

13. Verwendung eines nicht mischbaren kompatiblen oder inkompatiblen Kohlenstoffnanoröhrenummantelungspolymers mit einer Polymeraufnahmematrix, um eine homogene Verteilung der besagten Kohlenstoffnanoröhren in einer Polymeraufnahmematrix auf Nanoebene zu erreichen.
